# EUROPEAN PATENT SPECIFICATION

(11) **EP 4 013 593 B1**
(45) Date of publication and mention of the grant of the patent: **30.08.2023**
(21) Application number: 20735437.4
(22) Date of filing: 07.07.2020
(51) Int. Cl.: B29C 43/34, B65H 57/16, B29D 30/38, B65H 57/04, B65H 57/14, B29C 43/28, B29C 43/24, B29K 21/00, B29K 105/10, B29K 105/24

(54) **FILAMENT GUIDING AND MAINTENANCE MACHINE AND METHOD OF USE**
FILAMENTFÜHRUNGS- UND -WARTUNGSMASCHINE UND VERFAHREN ZUR VERWENDUNG
MACHINE DE GUIDAGE ET DE MAINTIEN DE FILAMENT ET PROCÉDÉ D'UTILISATION

(30) Priority: 12.08.2019 FR 1909160
(43) Date of publication of application: 22.06.2022
(73) Proprietor: COMPAGNIE GENERALE DES ETABLISSEMENTS MICHELIN, 63000 Clermont-Ferrand (FR)
(72) Inventor: LE NOEN, Guillaume, 63040 Clermont-Ferrand Cedex 9 (FR); SILER, Franck, 63040 Clermont-Ferrand Cedex 9 (FR); TREMBLIER, Jérôme, 63040 Clermont-Ferrand Cedex 9 (FR); FORICHON, Baptiste, 63040 Clermont-Ferrand Cedex 9 (FR)
(74) Representative: Roussy, Delphine
(86) International application number: PCT/EP2020/069061
(87) International publication number: WO 2021/028121

(56) References cited:
- EP-A1- 0 557 615
- FR-A1- 2 205 534
- JP-A- 2011 194 572
- US-A1- 2005 048 280

## Description

### Technical Domain

The invention relates to a process of aligning filaments in a calender line in which multiple filaments, extending in a warp direction and aligned in the form of a ply, are covered with rubber to make reinforced rubber plies for making tires. The invention also relates to a guiding and maintenance machine using such a process.

### Background

In the field of tires, it is required that the tire exhibit various performances (e.g., reduced rolling resistance, better wear resistance, comparable grip in wet and dry conditions, sufficient mileage, etc.). Tires are therefore composed of reinforced rubber plies having different types of rubber compounds with reinforcements of filaments or strips embedded in the rubber material. The nature of the filaments and the nature of the rubber are chosen according to the desired final characteristics. As used herein, the term "filament" includes, without limitation, metallic (such as steel wire, film or cable), synthetic or textile reinforcing elements (or "reinforcements").

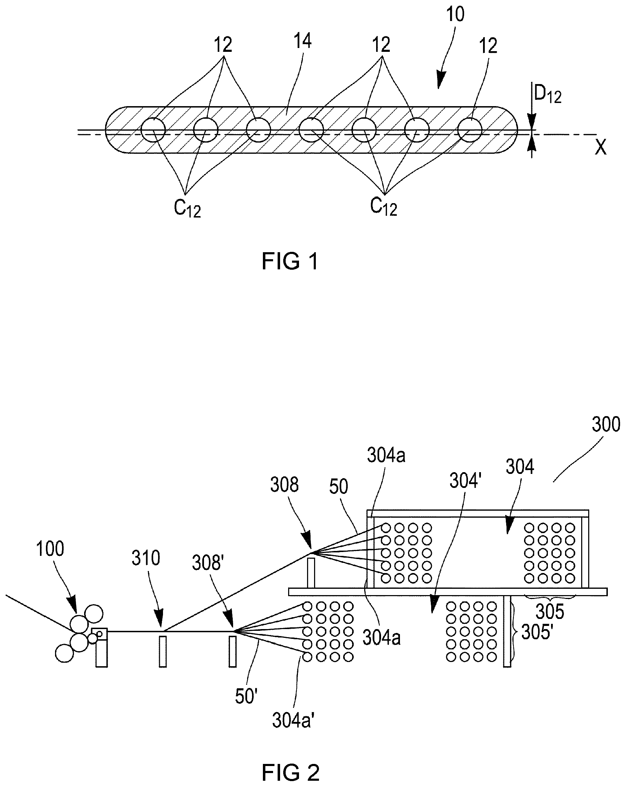

In order to produce reinforced rubber plies, it is known to calender metal reinforcements between two layers of unvulcanized rubber in order to produce reinforced rubber plies. As an example, as shown in Figure 1, a reinforced rubber sheet 10 has a plurality of continuous metal wires 12 having a common geometry. The wires 12 are laid parallel to each other and extend longitudinally between opposite ends of a rubber layer 14. After calendering, the wires 12 are evenly spaced from one another and also evenly positioned so that a center C₁₂ of each wire remains collinear along a defined longitudinal axis X through the thickness of the rubber layer 14. Preferably, the longitudinal and vertical alignment of the wires 12 is ensured in such a way that a maximum tolerance for a displacement D₁₂, measured between each wire center C₁₂ and the longitudinal axis X of the rubber layer 14, does not exceed a predetermined tolerance for the particular rubber layer being assembled (they are "aligned" and in "alignment"). The resulting plies are cut to size and assembled to form a tire blank.

To supply tire blank manufacturing machines (such as calendering machines that form a calendering line), known creel systems support a plurality of spools held in uniform rows, with each spool supporting a filament-wound material (or "filament"). In order to obtain a good quality ply, a plurality of filaments must be guided and maintained as they are fed to the rubber products. Each of the filaments is therefore moved to known guide and application rollers for positioning in a ply in a state where all filaments are aligned at predetermined intervals (as shown in Figure 1). Such a guide roller includes circumferential grooves that are formed at a predetermined pitch in an axial direction. The guide roller is brought into contact, at a certain pressure, with an application roller having circumferential grooves corresponding to the grooves of the guide roller. The filaments are mounted in a state in which the rubber material covers the already aligned filaments. Several solutions exist to realize this alignment, including solutions disclosed by publication EP 0 557 615 A1 (concerning a guiding and maintenance machine for positioning filaments at a predetermined pitch during a calendering cycle), publication WO2007/010599 (concerning a method for aligning reinforcements in a calendering line), publication WO2017/072948 (concerning a device for replacing filaments in a ply production system having at least two creel systems) and publication EP3124196 (concerning a metal reinforcement covering device having a movable reinforcement application device).

In addition, there are calendering machines for applying an elastomer to a known substrate (e.g., metal and/or fabric substrate). Such a machine proposed by Rodolfo Comerio Srl includes a group of cylinders with a first working cylinder ("first cylinder") and a second working cylinder ("second cylinder") that are located on each side of the substrate and define a gap for the substrate. In order to adjust the gap, a first adjustment device acts on the first cylinder to move it along an adjustment direction away from, or towards, the second cylinder. The group of cylinders also includes at least a first counter cylinder for calendering and spreading an elastomer on the surface of the first working cylinder. The first counter cylinder arranged adjacent to the first working cylinder rotates in the opposite direction to the first working cylinder. In order to adjust a gap existing between the first counter-cylinder and the first working cylinder, a second adjusting device acts on the first counter-cylinder to impart a thrust force of the first counter-cylinder in a predetermined direction toward the first working cylinder. The first and second working cylinders exert a thrust on the substrate to apply the elastomer to the substrate and to couple the elastomer to the substrate. Such a machine also includes a hydrostatic support for the first working cylinder to slide in the direction of adjustment and to hydrostatically support the thrust exerted by the first counter-cylinder (see publication EP3345736B 1).

None of the proposed solutions discloses the guiding and maintenance of the filaments by means of a preparation comb(s) mounted on the guide roller(s), ensuring a quick placement of the filaments in the grooves of the guide rollers (i.e., a filament "anti-jump" maintenance function). Furthermore, none of the proposed solutions discloses one or more mobile guide rollers that, by moving towards a corresponding application roller, permits the formation of an anti-jumping box of filaments by capture (or "imprisonment") and to maintain the positioning at the desired pitch whatever the traction. Thus, the disclosed invention combines the benefits of both functions for the purpose of facilitating the preparation and controlling the placement of filaments before and during a calendering process.

### Summary of the invention

The invention relates to a guiding and maintenance machine for positioning filaments at a predetermined pitch in a calendering cycle that carries out the manufacture of plies using the filaments. The guiding and maintenance machine includes a group of cylinders having a group of guide rollers with an upper guide roller and a lower guide roller, each guide roller having a predetermined diameter and a longitudinal axis about which the respective guide roller rotates, each guide roller also having a plurality of circumferential grooves defined on a respective circumferential surface in correspondence with the number of filaments to be aligned during a guiding and holding process. The cylinder group also includes an application roller having a predetermined diameter and a longitudinal axis about which the application roller rotates, the application roller having a plurality of circumferential grooves defined on a circumferential surface of the application roller in correspondence with the cumulative number of grooves of the guide rollers. The guiding and maintenance machine includes at least one preparation comb in correspondence with each guide roller, each preparation comb having a support with a predetermined length between two opposite ends and a predetermined width between a front surface and a top surface of which a plurality of teeth extend. The teeth have a predetermined uniform height and are parallel to each other along the length of the support. The teeth of a preparation comb attributed to the upper guide roller are positioned at a predetermined pitch in correspondence with the grooves of the upper guide roller. The teeth of a comb attributed to the lower guide roller are positioned at a predetermined pitch in correspondence with the grooves of the lower guide roller. Each guide roller is movable relative to the application roller between an open position, in which the filaments are fed to the guide rollers, and a closed position, in which each guide roller approaches the application roller to capture the filaments between the respective grooves of the guide rollers and the grooves of the application roller, so that the preparation combs accompany the filaments from a supply creel to the guide rollers at a predetermined pitch positioning outside of the guide rollers.

In certain embodiments, the guiding and maintenance machine includes a pair of preparation combs attributed to each of the upper and lower guide rollers. Each pair of preparation combs includes at least one mobile comb and at least one fixed comb mounted in alignment with a corresponding preparation zone so that the teeth of the mobile comb and the teeth of the fixed comb are aligned to allow the passage of the filaments through the mobile and fixed combs.

In some embodiments, each mobile comb is positioned between the corresponding preparation zone and a corresponding guide roller in such a way that the pitches between the teeth of each comb are aligned with the corresponding guide roller grooves.

In certain embodiments, the mobile combs are installed either tangentially or perpendicularly to a corresponding circumferential surface.

In certain embodiments, the pitch of the teeth is at least 0.7 mm and at most 1.4 mm.

The invention also relates to a calendering system for manufacturing reinforced rubber plies, the calendering system including:
- the disclosed guiding and maintenance machine;
- at least one supply creel that supports a plurality of spools held in uniform rows, each spool supporting a filament, each filament being fed from the spools to an outlet of the supply creel to the guiding and maintenance machine; and
a calendering machine having a calender roll on which at least one rubber layer is arranged to form a ply or plies with aligned and mutually parallel filaments with a predetermined density.

In certain embodiments of the system, the calendering system further includes a preparation zone associated with a corresponding supply creel, one preparation zone having a pair of preparation combs attributed to the upper guide roller and one preparation zone having a pair of preparation combs attributed to the lower guide roller, each pair of preparation combs including at least one mobile comb and at least one fixed comb mounted in alignment at a corresponding preparation zone such that the teeth of the mobile comb and the teeth of the fixed comb are aligned to allow the passage of the corresponding filaments through the pair of preparation combs from a respective outlet of the supply creel to the guiding and maintenance machine.

The invention also relates to a guiding and maintenance method performed by the disclosed calendering system during a calendering cycle, the method including the following steps:
- a step of feeding the filaments toward one or more combs attributed to the guide rollers from the outlet of the supply creel to the guiding and maintenance machine;
- a step of conveying the filaments arriving from the supply creel to the corresponding guide rollers of the machine;
- a step of inserting the filaments into the corresponding grooves of the guide rollers of the guiding and maintenance machine; and
- a step of moving the guide rollers from the open position to the closed position to capture the filaments between the guide rollers and the application roller so that the respective filaments enter the corresponding grooves of the application roller while maintaining the aligned state of the filaments.

In certain embodiments of carrying out the process, the step of conveying the filaments includes the following steps:
- a step of concomitantly pulling a mobile comb attributed to the upper guide roller and filaments toward the upper guide roller; and
- a step of concomitantly pulling of a mobile comb attributed to the lower guide roller and filaments toward the lower guide roller.

In certain embodiments of the process, the pulling of each mobile comb is carried out in such a way that the pitches between the teeth of each mobile comb are aligned with the corresponding grooves of the guide rollers.

In certain embodiments of the process, the pulling of the mobile combs is carried out in such a way that the mobile combs are installed either tangentially or perpendicularly relative to the circumferential surfaces of the guide rollers.

In certain embodiments of the process, the process further includes a step of transferring the filaments toward the grooves of the application roller in a state that is aligned and set with the grooves of the guide rollers.

In certain embodiments of the process, the process also includes a step of maintaining the mobile combs in an installed position.

In certain embodiments of the process, the process further includes a step of returning a mobile comb to the corresponding preparation zone after the end of a calendering cycle.

The invention also relates to a calendering cycle, the calendering cycle further including a step of feeding the calender cylinder of the calendering machine with filaments aligned by the guiding and maintenance machine.

The invention also relates to a calendering cycle including the process of the invention, the calendering cycle further including a step of conveying the filaments that are aligned by the guiding and maintenance machine to the calender cylinder of the calendering machine.

Further aspects of the invention will become evident from the following detailed description.

### Brief description of the drawings

The nature and the various advantages of the invention will become more evident upon reading the following detailed description, together with the attached drawings, in which the same reference numbers designate identical parts everywhere, and in which:
Figure 1 represents a lateral sectional view of a known reinforced rubber ply.
Figure 2 represents a schematic perspective view of a calendering system incorporating a guiding and maintenance machine of the invention and a preparation comb used with this machine.
Figure 3 represents a top view of alignment, realized by a preparation comb, of the filaments and grooves of a guide roller of the guiding and maintenance machine of the invention during a guiding and maintenance process.
Figures 4 and 5 represent a schematic top view of a guide roller of the guiding and maintenance machine of the invention in the open position and in the closed position, respectively.
Figure 6 represents a side view of an embodiment of a preparation comb provided with the guiding and maintenance machine of the invention.
Figures 7 to 11 represent an embodiment of a cycle of a guiding and maintenance process of the invention.

### Detailed description

Referring now to the figures, in which the same numbers identify the same elements, an embodiment of a guiding and maintenance machine (or "machine") 100 of the invention is represented that incorporates one or more preparation combs 200 supplied with the machine (an embodiment of a preparation comb 200 is shown in Figure 2 and described in the following description). The machine 100 can be part of a calendering system (or "system") 300 that performs a calendering cycle to form reinforced rubber plies (for example, such as the ply 10 shown in Figure 1). An example of such a system is represented by, and described in relation to, Figure 2.

The plies coming out of the machine 100 include different types of rubber compounds with reinforcing filaments embedded in the rubber material. Examples of suitable filaments include, without limitation, micro10 alloy carbon steel wires (0.9% carbon and 0.2% chromium) of the UHT type having a tensile strength (Rₘ) of approximately 3650 MPa (breaking force of 258 N) and a total elongation at break (Aₜ) of 2.3% (Rₘ and At being measured under tension in accordance with ISO 15 6892 of 1984). Each filament may be any individual steel reinforcement having a cross-sectional dimension (either diameter or thickness) greater than 100 µm. The filaments can have any suitable cross-sectional geometry.

A rubber ply used in a calendering cycle performed by the system 300 includes a conventional rubber-based composition for calendering plies, and its thickness can be adapted to the product in which it will be placed (e.g., in a belt). The rubber layer can be made from a diene elastomer, i.e., any elastomer derived at least in part from diene monomer. This diene elastomer can be selected from polybutadienes (BR), natural rubber (NR), synthetic polyisoprenes (IR), butadiene copolymers, isoprene copolymers and mixtures of these elastomers, such copolymers being selected from butadiene-styrene copolymers (SBR), isoprene-butadiene copolymers (BIR), isoprene-styrene copolymers (SIR), and isoprene-butadiene-styrene copolymers (SBIR). A rubber composition selected for the rubber ply may contain one or more diene elastomers and one or more additives commonly used in rubber matrices for the manufacture of tires. Such fillers include, without limitation, carbon black, silica, coupling agents, anti-aging agents, antioxidants, plasticizers, extender oils, plasticizing resins having a high glass transition temperature (above 30°C), agents improving the processability of the raw compositions, tackifying resins, anti-reversion agents, methylene acceptors and donors, reinforcing resins, known adhesion promoter systems of the metal salt type and a crosslinking or vulcanization system. A person of skill in the art understands how to adjust the formulation of the rubber composition to obtain the desired properties for a specific tire.

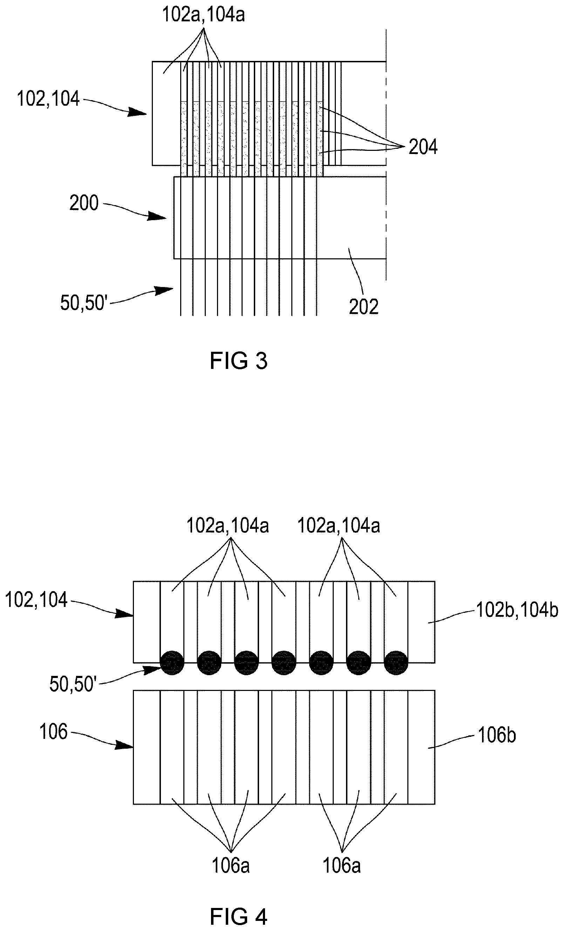

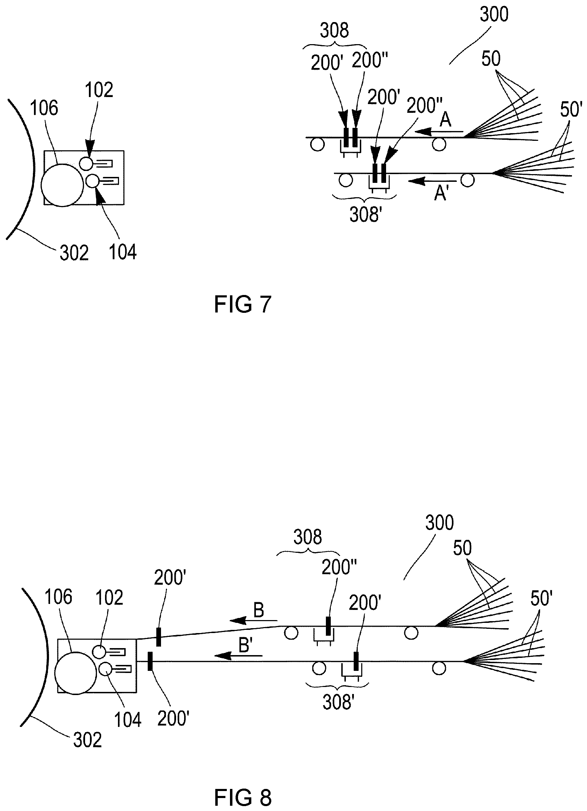

Referring to Figures 2 to 5, the machine 100 includes a group of grooved cylinders that apply several filaments 50, 50' to a rubber ply arranged on a calender roller 302 (shown in Figures 7 to 11) of a calendering machine of the system 300. The calendering machine is selected from commercially available calendering machines, including the types disclosed by patent EP3345736 and proposed by Rodolfo Comerio Srl. The filaments 50, 50' are applied to the rubber ply so that they are aligned parallel to each other at a predetermined density (see Figures 3, 4 and 5).

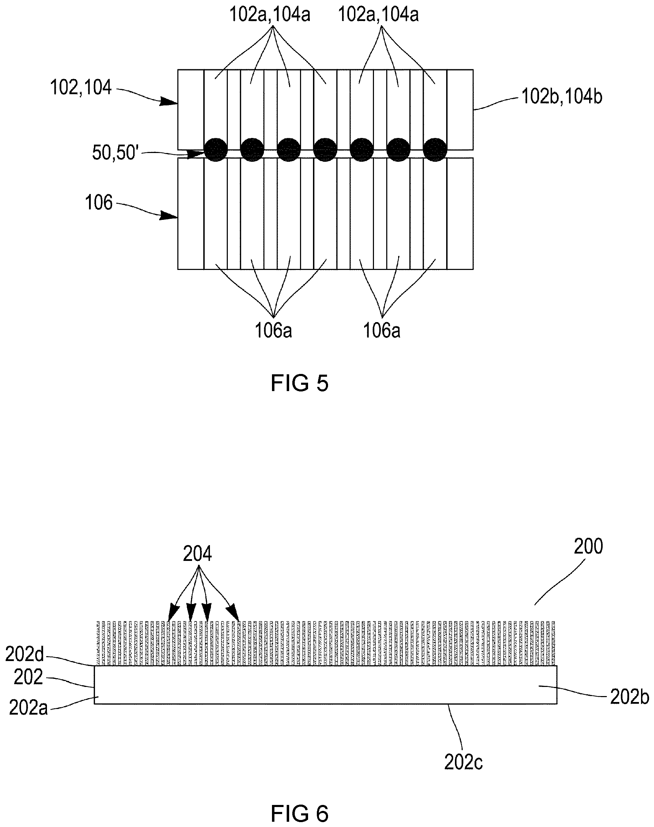

The cylinder group of the machine 100 includes a group of guide rollers having an upper guide roller 102 and a lower guide roller 104. Each guide roller 102, 104 has a predetermined diameter and a longitudinal axis about which the respective guide roller rotates. Several circumferential grooves (or "grooves") 102a are defined on a circumferential surface 102b of the upper guide roller 102 in correspondence with the number of filaments 50 that are to be aligned during a guiding and maintenance process (see Figures 4 and 5). Similarly, a plurality of circumferential grooves 104a is defined on a circumferential surface 104b of the lower guide roller 104 in correspondence with the number of filaments 50' that are to be aligned during a guiding and maintenance process (see Figures 4 and 5). During such a process, the filaments 50, 50' arrive at the guide rollers 102, 104 before they are applied to the rubber ply waiting on the calender roll 302. The properties of the filaments 50, 50' can be complementary with each other. It is understood that the grooves 102a of the upper guide roller 102 can align filaments 50 having known properties. At the same time the grooves 104a of the lower guide roller 104 can align filaments 50' having either similar or different (but complementary) properties to the properties of the filaments 50.

The cylinder group of the machine 100 also includes an application roller 106 having a predetermined diameter and a longitudinal axis around which the application roller rotates. Several circumferential grooves 106a are defined on the circumferential surface 106b of the application roller 106 in correspondence with the cumulative number of grooves of the guide rollers 102, 104 (see Figures 4 and 5).

The respective number of grooves 102a, 104a of the upper guide roller 102 and the lower guide roller 104 is adapted to a reduced density compared to a complete density of the grooves 106a of the application roller 106. For example, the grooves of each guide roller can be adapted to half the density of the full density of the grooves of the application roller. It is understood that the number of grooves shown in the figures is for illustrative purposes only and is not limited to the number of grooves shown. The number, density and/or geometry of grooves 102a, 104a, 106a can be adapted to the characteristics of the filaments and/or the properties of the rubber ply.

Referring again to Figures 2 to 5, the guide rollers 102, 104 are mobile relative to the application roller 106 between an open position, in which the filaments 50, 50' are fed to the respective guide rollers (see Figure 4), and a closed position, in which each guide roller approaches the application roller to capture the filaments between the respective grooves 102a, 104a of the guide rollers 102, 104 and the grooves 106a of the application roller 106 (see Figure 5). Thus, the introduced filaments 50, 50' are guided and held in alignment between the respective grooves 102a, 104a of the guide rollers 102, 104 and the grooves 106a of the application roller 106. As an example, Figures 4 and 5 show the respective open and closed positions of the upper guide roller 102 in relation to the alignment roller 106. It is understood that the lower guide roller 104 is mobile in the same way relative to the alignment roller 106.

In the open position, the guide rollers 102, 104 are positioned in relation to the application roller in such a way that the filaments 50, 50' fed to the machine 100 are easily deposited in the corresponding grooves. As an example, the filaments 50 are deposited in the corresponding grooves 102a of the upper guide roller 102, and the filaments 50' are deposited in the corresponding grooves 104a of the lower guide roller 104 (of course, the reverse positioning of the filaments 50, 50' in relation to the guide rollers 102, 104 can be achieved). In the closed position, the upper guide roller 102 and the application roller 106 are positioned in relation to the filaments 50 to permit the transfer of the filaments between the grooves 102a of the upper guide roller 102 and the grooves 106a of the application roller 106, this transfer taking place without loss of alignment of the filaments 50. Similarly, in the closed position, the lower guide roller 104 and the application roller 106 are positioned opposite each other with respect to the filaments 50' to effect transfer of the filaments between the grooves 104a of the lower guide roller 104 and the grooves 106a of the application roller 106, such transfer being without loss of alignment of the filaments 50'. The opening and closing of the guide roller 102 can be effected by known means (e.g., by a rotary closing device or its commercially known equivalents). The opening and/or closing of the guide rollers 102, 104 can be carried out automatically or manually to ensure the positioning of the filaments 50, 50' during a guiding and maintenance process of a calendering cycle.

To ensure an aligned introduction of the filaments 50, 50' to the guide rollers 102, 104, at least one preparation comb (or "comb") 200 is supplied together with the machine 100 in correspondence with each guide roller. Referring to Figure 6, each comb 200 includes a support 202 of a predetermined length between two opposite ends 202a, 202b. The support 202 has a predetermined width between a front surface 202c and a top surface 202d from which a plurality of teeth 204 extend. The teeth 204 have a predetermined uniform height and are aligned and parallel along the length of the support 202. The teeth 204 are positioned at a suitable pitch according to the intended guiding and maintenance process and in correspondence with the grooves. The teeth of a comb attributed to the upper guide roller 102 is thus in correspondence with the grooves 102a of the upper guide roller. The teeth of a comb attributed to the lower guide roller 104 is therefore in correspondence with the grooves 104a of the lower guide roller 104. In some embodiments of the comb, the teeth 204 are positioned at a pitch of at least 0.7 mm and at most 1.4 mm (which also corresponds to the respective grooves 102a, 104a of the upper guide roller 102 and the lower guide roller 104).

The filaments 50, 50' are fed into each comb 200 from a corresponding supply creel 304, 304' of the system 300 incorporating the machine 100 and at least one comb 200. Each supply creel 304, 304' supports a plurality of respective spools 305, 305' held in uniform rows. Each spool 305 supports a filament 50 and/or a filament 50'. As shown, a plurality of spools 305 is dedicated to filaments 50, and a second plurality of spools 305' is dedicated to filaments 50'. It is understood that this configuration is an example and is not limited to this configuration. Each supply creel can have *n* spools (where *n* equals a number between 1 and *n* inclusive). In some embodiments, two or more similar supply creels can be installed. Each filament 50, 50' is conveyed in a known manner by a guide from the spools 305, 305' to an outlet 304a, 304a' of the corresponding supply creel. The supply creels 304, 304' are selected from commercially available supply creels.

In the embodiment of the system 300 of Figure 2, the filaments 50, 50' are transferred from a corresponding outlet 304a, 304a' of the corresponding supply creel 304, 304' to a corresponding preparation zone 308, 308'. Each preparation zone 308, 308' incorporates at least one comb 200 attributed to each guide roller 102, 104. It is understood that each preparation zone 308, 308' can be arranged anywhere along a path between the outlet 304a, 304a' of the corresponding supply creel 304, 304' and the machine 100. It is also understood that one or more combs 200 can be installed with respect to each guide roller 102, 104 to directly guide the filaments 50, 50' to the corresponding grooves 102a, 104a.

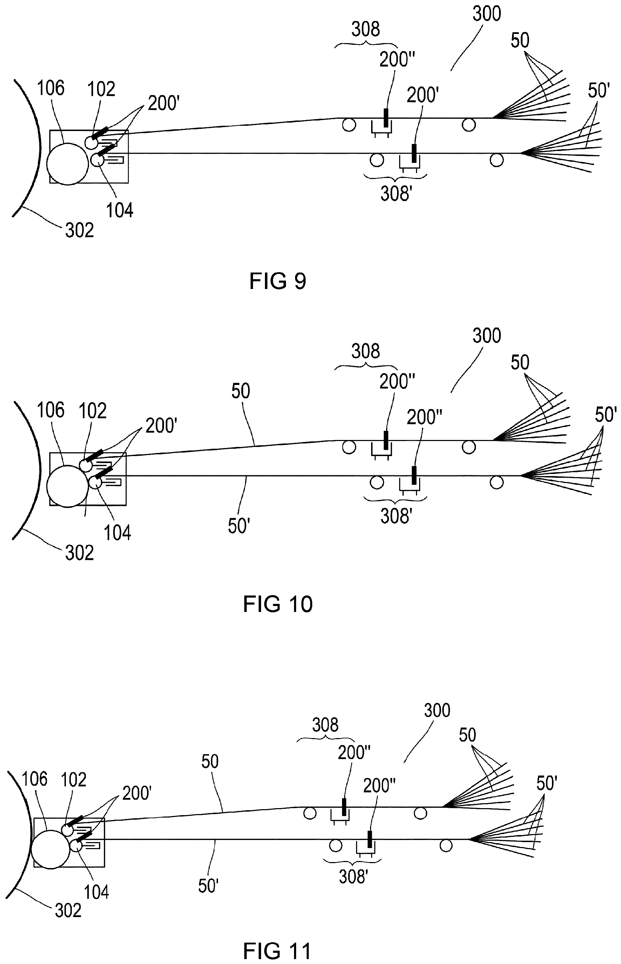

The pulling of a mobile comb 200' is effected until reaching a corresponding guide roller 102, 104 where it is installed. In one embodiment of the process, the mobile combs 200' are installed tangentially to the circumferential surfaces 102b, 104b of the corresponding guide rollers (see Figure 9). In an embodiment of the process, the mobile combs 200' are installed perpendicular to the circumferential surfaces 102b, 104b of the corresponding guide rollers. In both embodiments, the pitches between the teeth 204 of the mobile comb 200' are aligned with the corresponding grooves 102a of a corresponding guide roller 102, 104.

Referring to Figure 3, this figure represents a top view of alignment, performed by a comb 200, of the filaments 50 and the grooves 102a of the upper guide roller 102 of the machine 100 during a guiding and maintenance process. This configuration is described in relation to the supply creel 304 and the filaments 50. It is understood that this alignment is carried out in the same way by a comb 200, filaments 50' and grooves 104a of the lower guide roller 104. Each comb attributed to each guide roller 102, 104 has teeth 400 adapted to the corresponding density of the grooves 102a, 104a.

The comb 200 attributed to the guide roller 102 has the function of preparing the filaments 50 for positioning at the desired pitch outside of the upper guide roller 102 ("positioning"). The comb 200 attributed to the guide roller 102 also has the function of accompanying the filaments 50 from the supply creel 304 to the upper guide roller 102 in this positioning. In this working position, installed in a fixed position in relation to the grooves 102a of the upper guide roller 102, one or more combs 200 permit guidance of the filaments 50 toward the grooves 102a of the upper guide roller 102 and maintenance of this positioning during the use of the filaments 50. The guiding and maintenance of the filaments 50 by means of the comb (or combs) 200 installed in relation to the upper guide roller 102 ensures a quick and correct positioning of the filaments 50 in the corresponding grooves 102a of the upper guide roller 102.

Referring to Figures 4 and 5, these figures represent a schematic top view of the upper guide roller 102 of the machine 100 in the open position (Figure 4) and in the closed position (Figure 5) relative to the application roller 106. In the open position, the filaments 50 are introduced in one-to-one correspondence with the grooves 102a of the upper guide roller 102 during a guiding and maintenance process. In the closed position, the upper guide roller 102 moves toward the application roller 106 to capture (or "trap") the filaments 50 between the respective grooves 102a, 106a of the upper guide roller 102 and the application roller 104. In this operating position, the upper guide roller 102 moves close enough to the application roller 106 to form an anti-jump cage (or "box") that prevents the filaments 50 from exiting the grooves 106a of the application roller 106. The upper guide roller 102 is therefore used to guide and maintain, with the necessary restraint, the filaments 50 onto the application roller 106. The positioning of the filaments 50 at the desired pitch is thus maintained regardless of the traction.

The same opening and closing process is carried out by the lower guide roller 104 in relation to the application roller 106. In the open position, the filaments 50' are introduced in one-by-one correspondence with the grooves 104a of the lower guide roller 104 during a guiding and maintenance process. In the closed position, the lower guide roller 104 approaches the application roller 106 to capture the filaments 50' between the respective grooves 104a, 106a of the lower guide roller 102 and the application roller 106. In this working position, the lower guide roller 104 moves sufficiently close to the application roller 106 to form an anti-jump cage that prevents the filaments 50' from coming out of the grooves 106a of the application roller 106. This maintains the positioning of the filaments 50' at the desired pitch regardless of traction.

Referring again to Figures 2 to 6 and furthermore to Figures 7 to 11, a detailed description is given of an exemplary guiding and maintenance process of the invention. Such a guiding and maintenance process is carried out during a calendering cycle performed by the system 300. It is understood that the process can be easily adapted for all embodiments of the system 300 incorporating the combs 200.

When starting a guiding and maintenance process of the invention, the guiding and maintenance process includes a step of feeding the filaments 50, 50' toward one or more combs 200 attributed to the guide rollers 102, 104. This step includes a step of feeding the filaments 50 from the spools 305 arranged in the supply creel 304 toward the corresponding preparation zone 308 of the system 300 (see arrow A in Figure 7). This step also includes the step of feeding the filaments 50' from the spools 305' arranged on the supply creel 304' toward the corresponding preparation zone 308' of the system 300 (see arrow A' in Figure 7). In the embodiment of the process shown in Figures 7 to 11, the feeding of the filaments 50, 50' is effected in a known manner from the outlets 304a, 304a' of the supply creels 304, 304'. At each preparation zone 308, 308', there is a mobile comb 200' and a fixed comb 200" attributed to each of the upper guide roller 102 and the lower guide roller 104. Each of the mobile and fixed combs has the same configuration as shown in figure 6. The mobile and fixed combs 200', 200"are mounted in alignment at each preparation zone 308, 308' (i.e., the teeth 204 of both combs are aligned to allow the passage of the filaments 50, 50' through both combs). During this step, each fixed comb 200" initially prepares the corresponding 50, 50' filaments at a positioning at the desired pitch so that the corresponding mobile comb 200' can accompany the filaments to the corresponding guide roller 102, 104 in this positioning.

The guiding and maintenance process further includes a step of conveying the corresponding filaments 50, 50' arriving from the supply creels 304, 304' to the corresponding guide rollers 102, 104 of the machine 100 (see Figure 8). This step includes a step of pulling a mobile comb 200' attributed to the upper guide roller 102 and the filaments 50 together toward the upper guide roller (see arrow B in Figure 8). This step also includes the step of pulling a mobile comb 200' attributed to the lower guide roller 104 and the filaments 50' together toward the lower guide roller (see arrow B' in Figure 8). During this pulling, the filaments 50, 50' are guided toward the machine 100 with their positioning maintained. At the same time, the two fixed combs 200" continue the upstream preparation of the filaments 50, 50' so as to maintain the filament positioning throughout the guiding and maintenance process.

In an embodiment of the process, each mobile comb 200' is pulled until it is installed tangentially to the circumferential surfaces 102b, 104b (see Figure 9). In an embodiment of the process, each mobile comb 200' is pulled until it is installed perpendicularly to the circumferential surfaces 102b, 104b. In both embodiments, the pitches between the teeth 204 of each mobile comb 200' attributed to the upper guide roller 102 are aligned with the corresponding grooves 102a of the upper guide roller. Also, in both embodiments, the pitches between the teeth 204 of each mobile comb 200' attributed to the lower guide roller 104 are aligned with the corresponding grooves 104a of the lower guide roller.

The guiding and maintenance process also includes, as part of the alignment work, a step of placing the filaments 50, 50' in the corresponding grooves 102a, 104a of the guide rollers 102, 104 of the machine 100 (see Figure 9). This step is carried out with the filaments 50, 50' maintained in their position by the attributed mobile comb 200' (see Figure 3 that represents a diagram of the positioning carried out during this step). During this step, the filaments 50, 50' are first inserted into corresponding grooves 102a, 104a on one side of the upper surface 202d of the attributed mobile comb 200'. In the embodiment where the mobile comb 200' is installed tangentially to the circumferential surface of the guide roller involved, the guide roller remains in the open position during this step (see Figure 4). Of course, the mobile comb 200' could be installed perpendicularly. During this step, the application roller 106 should be opposite the upper surface side 202d of the attributed mobile comb 200' (see Figure 10).

The guiding and maintenance process further includes a step of moving each guide roller 102, 104 from the open position (represented in Figure 4) to the closed position (represented in Figure 5) (see Figures 10 and 11). During this step, to prevent filament jumping, the filaments 50 are captured (or "trapped") between the upper guide roller 102 and the application roller 106, and the filaments 50' are captured (or "trapped") between the lower guide roller 104 and the application roller 106. Thus, the filaments 50, 50' are transferred, aligned and positioned in the corresponding grooves 102a, 104a of the guide rollers 102, 104 and in the grooves 106a of the application roller 106, so that the respective filaments enter the corresponding grooves 106a of the application roller 106, while remaining aligned.

In some embodiments, the guiding and maintenance process may also include a step of returning the mobile combs 200' to the preparation zone 308. During this step, each mobile comb 200' returns to its initial position next to the corresponding fixed comb 200" while waiting for the process to be repeated. It is desirable to keep the mobile comb 200' in the installed position (either tangential or perpendicular).

In embodiments, the guiding and maintenance process of the invention may include a step of returning the mobile combs 200' to the corresponding preparation zones 308, 308'. This step is carried out after the end of the calendering cycle. During this step, each mobile comb 200' returns to its initial position next to the corresponding fixed comb 200"while waiting for the start of a calendering cycle.

The guiding and maintenance process may be part of a calendering cycle that further includes a step of conveying the aligned filaments 50, 50' from the machine 100 to the calender cylinder 302 of the calendering machine (see Figure 11). During this step, a rubber ply is already deposited on a working surface of the calender cylinder 302 and awaits the production of a ply or plies reinforced by the filaments 50, 50'. The machine 100 ensures the correct positioning of the filaments 50, 50' to create such a ply at the end of the calendering cycle. At the end of the calendering cycle, one or more plies can be produced, that can be used, for example, as a carcass ply or as a breaker ply intended to reinforce a tire crown, lower than the tread.

At the end of the calendering cycle, the product is finished and can be used in a downstream process (that may be, for example, a palletizing process, a shaping process, and/or another process). The machine 100 incorporating the combs 200 (including the mobile combs 200' and the fixed combs 200") ensures planarity in continuous plies of reinforced rubber prior to the final assembly of a tire blank.

A guiding and maintenance process of the invention (and also a cycle of the calendering process of which the process is a part) can be controlled by PLC and can include pre-programming of management information. For example, a process setting can be defined using the properties of the filaments fed to the comb 200 and the machine 100. A process setting can also be defined using the properties of a rubber ply waiting at the calender cylinder 302.

A monitoring system can be set up for all embodiments. At least part of the monitoring system may be provided in a portable device such as a mobile network device (e.g., mobile phone, laptop computer, network-connected portable device(s) (including "augmented reality" and/or "virtual reality" devices, network-connected portable clothing and/or any combination and/or equivalent)).

In certain embodiments of the invention, the machine 100 (and/or a system that incorporates the machine 10, including the system 300) may receive voice commands or other audio data representing, for example, the current state of the guidance and holding process in progress relative to the intended state. The response may be generated in audible, visual, tactile (e.g., using a haptic interface) and/or virtual and/or augmented form.

In an embodiment, the process may include a step of training the machine 100 (or driving a system that incorporates the machine 100, including the system 300) to recognize representative characteristics of the filaments 50, 50' exiting the supply creel 304 (e.g., diameter and tensile strength values) and to compare them with target values. This step may include a step of training the machine 100 to recognize non-equivalences between the compared values. Each training step includes a classification generated by means of machine learning. This classification may include, without limitation, the parameters of the filament materials used, the parameters of the plies produced, the duration of the calendering cycles and the values expected at the end of a cycle in progress (for example, the value of the space between the aligned filaments in a ply, etc.).

The machine 100 incorporating the comb 200 is suitable for processing a variety of filaments for use in a variety of rubber mixtures without reducing industrial productivity.

The invention is aimed at reducing time and labor during the operation of inserting a multiplicity of filaments into grooves of a guide roller and an application roller in order to align them in a calendering system. The invention enables the rapid and ergonomic positioning of any type of filament at a controlled pitch for use in a calendering cycle that performs the manufacture of plies. The machine 100 and the comb 200 together form a device that prevents any variation of the pitch and any jump between the filaments with an easy and ergonomic preparation in time, with the aim of forming a filament ply of the desired width at the desired density.

The terms "at least one" and "one or more" are used interchangeably. Ranges that are presented as "between a and b" include the values "a" and "b".

## Claims

1. A guiding and maintenance machine (100) for positioning filaments (50, 50') at a predetermined pitch during a calendering cycle that performs manufacture of plies using the filaments, the guidance and maintenance machine comprising a cylinder group that includes a group of guide rollers with an upper guide roller (102) and a lower guide roller (104), each guide roller (102, 104) having a predetermined diameter and a longitudinal axis about which the respective guide roller rotates, each guide roller (102, 104) also having a plurality of circumferential grooves (102a, 104a) defined on a respective circumferential surface (102b, 104b) in correspondence with the number of filaments to be aligned during a guiding and maintenance process,
the cylinder group also comprising an application roller (106) having a predetermined diameter and a longitudinal axis about which the application roller rotates, the application roller having a plurality of circumferential grooves (106a) defined on a circumferential surface (106b) of the application roller in correspondence with the cumulative number of grooves of the guide rollers (102, 104), **characterized in that**:
the guidance and maintenance machine (100) comprises at least one preparation comb (200) provided in correspondence with each guide roller (102, 104), each preparation comb comprising a support (202) having a predetermined length between two opposite ends (202a, 202b) and a predetermined width between a front surface (202c) and a top surface (202d) from which a plurality of teeth (204) extend, the teeth (204) having a predetermined uniform height and being parallel to each other along the length of the support (202), the teeth of a preparation comb attributed to the upper guide roller (102) being positioned at a predetermined pitch in correspondence with the grooves (102a) of the upper guide roller, and the teeth of a comb attributed to the lower guide roller (104) being positioned at a predetermined pitch in correspondence with the grooves (104a) of the lower guide roller;
and **in that** each guide roller (102, 104) is movable relative to the application roller (106) between an open position, in which the filaments (50, 50') are introduced into the guide rollers, and a closed position, in which each guide roller approaches the application roller to capture the filaments between the respective grooves (102a, 104a) of the guide rollers (102, 104) and the grooves (106a) of the application roller (106);
so that the preparation combs (200) accompany the filaments (50, 50') from a corresponding supply creel (304, 304') to the guide rollers (102, 104) at a predetermined pitch positioning outside the guide rollers (102, 104).

2. The guiding and maintenance machine (100) of claim 1, comprising a pair of preparation combs attributed to each of the upper guide roller (102) and the lower guide roller (104), each pair of preparation combs comprising at least one mobile comb (200') and at least one fixed comb (200") mounted in alignment with a corresponding preparation zone (308, 308') in such a way that the teeth (204) of the mobile comb and the teeth of the fixed comb are aligned to allow the passage of the filaments (50, 50') through the mobile and fixed combs.

3. The guiding and maintenance machine (100) of claim 2, wherein each mobile comb (200') is positioned between the corresponding preparation zone (308, 308') and a corresponding guide roller (102, 104) such that the pitches between the teeth of each comb are aligned with grooves (102a, 104a) corresponding to the guide rollers.

4. The guiding and maintenance machine (100) of claim 3, wherein the mobile combs (200') are installed either tangentially or perpendicularly to a corresponding circumferential surface (102b, 104b).

5. The guiding and maintenance machine (100) of any one of claims 1 to 4, wherein the pitch of the teeth (204) is at least 0.7 mm and at most 1.4 mm.

6. A calendering system (300) for making reinforced rubber plies, the calendering system comprising:
the guiding and maintenance machine (100) of any one of claims 1 to 5;
at least one supply creel (304, 304') that supports a plurality of spools (305, 305') held in uniform rows, each spool supporting a filament (50, 50'), each filament being fed from the spools to an outlet (304a) of the supply creel to the guiding and maintenance machine (100); and
a calendering machine comprising a calender roll (302) upon which at least one rubber ply is arranged to form a ply or plies with the filaments (50, 50') aligned and parallel to each other with a predetermined density.

7. The calendering system (300) of claim 6, further comprising a preparation zone (308, 308') associated with a corresponding supply creel (304, 304'), a preparation zone (308) comprising a pair of preparation combs attributed to the upper guide roller (102) and a preparation zone (308') comprising a pair of preparation combs attributed to the lower guide roller (104), each pair of preparation combs comprising at least one mobile comb (200') and at least one fixed comb (200") mounted in alignment with a corresponding preparation zone (308, 308') in such a way that the teeth (204) of the mobile comb and the teeth of the fixed comb are aligned to allow the passage of the filaments (50), 50') through the pair of preparation combs from a respective outlet (304a, 304a') of the supply creel (304, 304') to the guiding and maintenance machine (100).

8. A guiding and maintenance process performed by the calendering system (300) of claim 6 or claim 7 during a calendering cycle, the process comprising the following steps:
a step of feeding the filaments (50, 50') to one or more combs (200) attributed to the guide rollers (102, 104) from the outlet of the supply creel to the guiding and maintenance machine (100);
a step of conveying the filaments (50, 50') arriving from the supply creel (304, 304') to the corresponding guide rollers (102, 104) of the machine (100);
a step of inserting the filaments (50, 50') into the corresponding grooves (102a, 104a) of the guide rollers (102, 104) of the guiding and holding machine (100); and
a step of moving the guide rollers (102, 104) from the open position to the closed position to capture the filaments (50, 50') between the guide rollers (102, 104) and the application roller (106) so that the respective filaments enter the corresponding grooves (106a) of the application roller (106) while maintaining the aligned state of the filaments.

9. The process of claim 8, wherein the step of conveying the filaments (50, 50') comprises the following steps:
a step of pulling concomitantly a mobile comb (200') attributed to the upper guide roller (102) and the filaments (50) toward the upper guide roller; and
a step of pulling concomitantly a mobile comb (200') attributed to the lower guide roller (104) and the filaments (50') toward the lower guide roller.

10. The process of claim 9, wherein the pulling of each mobile comb (200') is performed such that the pitches between the teeth (204) of the mobile comb (200') are aligned with the corresponding grooves (102a, 104a) of the guide rollers (102, 104).

11. The process of claim 10, wherein the pulling of the mobile combs (200') is performed such that the mobile combs (200') are installed either tangentially or perpendicularly to the circumferential surfaces (102b, 104b) of the guide rollers (102, 104).

12. The process of claim 10 or claim 11, further comprising a step of transferring the filaments (50, 50') in a state aligned and installed with the grooves (102a, 104a) of the guide rollers (102, 104) to the grooves (106a) of the application roller (104).

13. The process of any one of Claims 10 to 12, further comprising a step of maintaining the mobile combs (200') in an installed position.

14. The process of claim 13, further comprising a step of returning a mobile comb (200') to the corresponding preparation zone (308, 308') after the end of a calendering cycle.

15. A calendering cycle comprising the process of any one of claims 8 to 14, the calendering cycle further comprising a step of feeding the calender cylinder (302) of the calendering machine with filaments (50, 50') that are aligned by the guiding and maintenance machine (100).

## Patentansprüche

1. Führungs- und Haltemaschine (100) zum Positionieren von Filamenten (50, 50') bei einem vorbestimmten Abstand während eines Kalandrierungszyklus, der die Fertigung von Lagen unter Verwendung der Filamente durchführt, wobei die Führungs- und Haltemaschine eine Zylindergruppe umfasst, die eine Gruppe von Führungsrollen mit einer oberen Führungsrolle (102) und einer unteren Führungsrolle (104) umfasst, wobei jede Führungsrolle (102, 104) einen vorbestimmten Durchmesser und eine Längsachse, um die die entsprechende Führungsrolle rotiert, aufweist, wobei jede Führungsrolle (102, 104) auch mehrere umlaufende Nuten (102a, 104a), die auf einer entsprechenden umlaufenden Oberfläche (102b, 104b) definiert sind, in Entsprechung mit der Anzahl von Filamenten, die während der Führungs- und Halteprozesses auszurichten sind, aufweist,
wobei die Zylindergruppe auch eine Anwendungsrolle (106) umfasst, die einen vorbestimmten Durchmesser und eine Längsachse, um die die Anwendungsrolle rotiert, aufweist, wobei die Anwendungsrolle mehrere umlaufende Nuten (106a), die auf einer umlaufenden Oberfläche (106b) der Anwendungsrolle in Entsprechung mit der kumulativen Anzahl von Nuten der Führungsrollen (102, 104) definiert sind, aufweist, **dadurch gekennzeichnet, dass**:
die Führungs- und Haltemaschine (100) zumindest einen Vorbereitungskamm (200) umfasst, der in Entsprechung mit jeder Führungsrolle (102, 104) bereitgestellt wird, wobei jeder Vorbereitungskamm einen Träger (202) umfasst, der eine vorbestimmte Länge zwischen zwei einander gegenüberliegenden Enden (202a, 202b) und eine vorbestimmte Breite zwischen einer vorderen Oberfläche (202c) und einer oberen Oberfläche (202d), von der sich mehrere Zähne (204) erstrecken, aufweist, wobei die Zähne (204) eine vorbestimmte gleichförmige Höhe aufweisen und entlang der Länge des Trägers (202) parallel zueinander sind, wobei die Zähne eines Vorbereitungskamms, die der oberen Führungsrolle (102) zugeordnet werden, bei einem vorbestimmten Abstand in Entsprechung mit den Nuten (102a) der oberen Führungsrolle positioniert sind, und wobei die Zähne eines Kamms, die der unteren Führungsrolle (104) zugeordnet werden, bei einem vorbestimmten Abstand in Entsprechung mit den Nuten (104a) der unteren Führungsrolle positioniert sind;
und dadurch, dass jede Führungsrolle (102, 104) relativ zur Anwendungsrolle (106) zwischen einer offenen Position, in der die Filamente (50, 50') in die Führungsrollen eingeführt werden, und einer geschlossenen Position, in der sich jede Führungsrolle der Anwendungsrolle nähert, um die Filamente zwischen den entsprechenden Nuten (102a, 104a) der Führungsrollen (102, 104) und den Nuten (106a) der Anwendungsrolle (106) zu erfassen, bewegbar ist;
sodass die Vorbereitungskämme (200) die Filamente (50, 50') von einem entsprechenden Versorgungsgestell (304, 304') bis zu den Führungsrollen (102, 104) bei einem vorbestimmten Abstand begleiten, sich außerhalb der Führungsrollen (102, 104) positionierend.

2. Führungs- und Haltemaschine (100) nach Anspruch 1, umfassend ein Paar Vorbereitungskämme, die jeder aus der oberen Führungsrolle (102) und der unteren Führungsrolle (104) zugeordnet werden, wobei jedes Paar Vorbereitungskämme zumindest einen mobilen Kamm (200') und zumindest einen festen Kamm (200") umfasst, montiert in Ausrichtung mit einer entsprechenden Vorbereitungszone (308, 308') in einer Weise, dass die Zähne (204) des mobilen Kamms und die Zähne des festen Kamms ausgerichtet sind, um den Durchgang der Filamente (50, 50') durch den mobilen und den festen Kamm zu ermöglichen.

3. Führungs- und Haltemaschine (100) nach Anspruch 2, wobei jeder mobile Kamm (200') zwischen der entsprechenden Vorbereitungszone (308, 308') und einer entsprechenden Führungsrolle (102, 104) positioniert ist, sodass die Abstände zwischen den Zähnen jedes Kamms mit Nuten (102a, 104a) entsprechend den Führungsrollen ausgerichtet sind.

4. Führungs- und Haltemaschine (100) nach Anspruch 3, wobei die mobilen Kämme (200') entweder tangential oder senkrecht zu einer entsprechenden umlaufenden Oberfläche (102b, 104b) installiert sind.

5. Führungs- und Haltemaschine (100) nach einem der Ansprüche 1 bis 4, wobei der Abstand der Zähne (204) mindestens 0,7 mm und höchstens 1,4 mm ist.

6. Kalandrierungssystem (300) zur Fertigung verstärkter Gummilagen, wobei das Kalandrierungssystem Folgendes umfasst:
die Führungs- und Haltemaschine (100) nach einem der Ansprüche 1 bis 5;
zumindest ein Versorgungsgestell (304, 304'), das mehrere Spulen (305, 305') trägt, die in gleichförmigen Reihen gehalten werden, wobei jede Spule ein Filament (50, 50') trägt, wobei jedes Filament von der Spule zu einem Auslass (304a) des Versorgungsgestells zur Führungs- und Haltemaschine (100) zugeführt wird; und
eine Kalandrierungsmaschine, umfassend eine Kalandrierungsrolle (302), auf der zumindest eine Gummilage angeordnet ist, um eine Lage oder Lagen mit den Filamenten (50, 50') zu bilden, die ausgerichtet und parallel zueinander mit einer vorbestimmten Dichte sind.

7. Kalandrierungssystem (300) nach Anspruch 6, ferner umfassend eine Vorbereitungszone (308, 308') in Verbindung mit einem entsprechenden Versorgungsgestell (304, 304'), wobei eine Vorbereitungszone (308) ein Paar Vorbereitungskämme umfasst, die der oberen Führungsrolle (102) zugeordnet sind, und eine Vorbereitungszone (308') ein Paar Vorbereitungskämme umfasst, die der unteren Führungsrolle (104) zugeordnet sind, wobei jedes Paar Vorbereitungskämme zumindest einen mobilen Kamm (200') und zumindest einen festen Kamm (200") umfasst, die in Ausrichtung mit einer entsprechenden Vorbereitungszone (308, 308') montiert sind, in einer Weise, dass die Zähne (204) des mobilen Kamms und die Zähne des festen Kamms ausgerichtet sind, um den Durchgang der Filamente (50), 50') durch das Paar Vorbereitungskämme von einem jeweiligen Auslass (304a, 304a') des Versorgungsgestells (304, 304') zur Führungs- und Haltemaschine (100) zu ermöglichen.

8. Führungs- und Halteprozess, durchgeführt durch das Kalandrierungssystem (300) nach Anspruch 6 oder Anspruch 7 während eines Kalandrierungszyklus, wobei der Prozess die folgenden Schritte umfasst:
einen Schritt des Zuführens der Filamente (50, 50') zu einem oder mehreren Kämmen (200), die den Führungsrollen (102, 104) zugeordnet sind, vom Auslass des Versorgungsgestells zur Führungs- und Haltemaschine (100) ;
einen Schritt des Beförderns der Filamente (50, 50'), die vom Versorgungsgestell (304, 304') ankommen, zu den entsprechenden Führungsrollen (102, 104) der Maschine (100) ;
einen Schritt des Einsetzens der Filamente (50, 50') in die entsprechenden Nuten (102a, 104a) der Führungsrollen (102, 104) der Führungs- und Haltemaschine (100); und
einen Schritt des Bewegens der Führungsrollen (102, 104) aus der offenen Position in die geschlossene Position zum Erfassen der Filamente (50, 50') zwischen den Führungsrollen (102, 104) und der Anwendungsrolle (106), sodass die entsprechenden Filamente in die entsprechenden Nuten (106a) der Anwendungsrolle (106) eintreten, während der ausgerichtete Zustand der Filamente beibehalten wird.

9. Prozess nach Anspruch 8, wobei der Schritt des Beförderns der Filamente (50, 50') die folgenden Schritte umfasst:
einen Schritt des begleitenden Ziehens eines mobilen Kamms (200'), der der oberen Führungsrolle (102) zugeordnet ist, und der Filamente (50) in Richtung der oberen Führungsrolle; und
einen Schritt des begleitenden Ziehens eines mobilen Kamms (200'), der der unteren Führungsrolle (104) zugeordnet ist, und der Filamente (50') in Richtung der unteren Führungsrolle.

10. Prozess nach Anspruch 9, wobei das Ziehen jedes mobilen Kamms (200') so durchgeführt wird, dass die Abstände zwischen den Zähnen (204) des mobilen Kamms (200') ausgerichtet sind mit den entsprechenden Nuten (102a, 104a) der Führungsrollen (102, 104).

11. Prozess nach Anspruch 10, wobei das Ziehen der mobilen Kämme (200') so durchgeführt wird, dass die mobilen Kämme (200') entweder tangential oder senkrecht zu den umlaufenden Oberflächen (102b, 104b) der Führungsrollen (102, 104) installiert sind.

12. Prozess nach Anspruch 10 oder Anspruch 11, ferner umfassend einen Schritt des Transferierens der Filamente (50, 50') in einem Zustand, ausgerichtet und installiert mit den Nuten (102a, 104a) der Führungsrollen (102, 104), in die Nuten (106a) der Anwendungsrolle (104).

13. Prozess nach einem der Ansprüche 10 bis 12, ferner umfassend einen Schritt des Haltens der mobilen Kämme (200') in einer installierten Position.

14. Prozess nach Anspruch 13, ferner umfassend einen Schritt des Zurückkehrens eines mobilen Kamms (200') in die entsprechende Vorbereitungszone (308, 308') nach dem Ende eines Kalandrierungszyklus.

15. Kalandrierungszyklus, umfassend den Prozess nach einem der Ansprüche 8 bis 14, wobei der Kalandrierungszyklus ferner einen Schritt des Versorgens des Kalanderzylinders (302) der Kalandrierungsmaschine (50, 50) mit Filamenten umfasst, die durch die Führungs- und Haltemaschine (100) ausgerichtet werden.

## Revendications

1. Une machine de guidage et de maintien (100) pour permettre un positionnement de fils (50, 50') à un pas prédéterminé dans un cycle de calandrage qui réalise la fabrication de nappes utilisant les fils, la machine de guidage et de maintien comprenant un groupe de cylindres qui inclut un groupe de rouleaux de guidage avec un rouleau de guidage supérieur (102) et un rouleau de guidage inférieur (104), chaque rouleau de guidage (102, 104) ayant un diamètre prédéterminé et un axe longitudinal autour duquel le rouleau de guidage respectif se tourne, chaque rouleau de guidage (102, 104) ayant aussi plusieurs rainures circonférentielles (102a, 104a) définies sur une surface circonférentielle respective (102b, 104b) en correspondance avec le nombre de fils qui doivent être alignés pendant un procédé de maintien et guidage,
le groupe de cylindres comprenant aussi un rouleau d'application (106) ayant un diamètre prédéterminé et un axe longitudinal autour duquel le rouleau d'application tourne, le rouleau d'application ayant plusieurs rainures circonférentielles (106a) définies sur une surface circonférentielle (106b) du rouleau d'application en correspondance avec le nombre de rainures cumulatif des rouleaux de guidage (102, 104), **caractérisée en ce que** :
la machine de guidage et de maintien (100) comprend au moins un peigne de préparation (200) fourni en correspondance avec chaque rouleau de guidage (102, 104), chaque peigne de préparation comprenant un support (202) d'une longueur prédéterminée entre deux extrémités (202a, 202b) opposées et d'une largeur prédéterminée entre une surface antérieure (202c) et une surface supérieure (202d) de laquelle une pluralité de dentures (204) s'étendent, les dentures (204) ayant une hauteur uniforme prédéterminée et étant parallèles entre elles le long de la longueur du support (202), les dentures d'un peigne de préparation attribué au rouleau de guidage supérieur (102) étant positionnés à un pas prédéterminé en correspondance avec les rainures (102a) du rouleau de guidage supérieur, et les dentures d'un peigne attribué au rouleau de guidage inférieur (104) étant positionnés à un pas prédéterminé en correspondance avec les rainures (104a) du rouleau de guidage inférieur ;
et **en ce que** chaque rouleau de guidage (102, 104) est amovible par rapport au rouleau d'application (106) entre une position ouverte, dans laquelle les fils (50, 50') sont introduits dans les rouleaux de guidage, et une position fermée, dans laquelle chaque rouleau de guidage se rapproche du rouleau d'application pour capturer les fils entre les rainures respectives (102a, 104a) des rouleaux de guidage (102, 104) et les rainures (106a) du rouleau d'application (106);
de sorte que les peignes de préparation (200) accompagnent les fils (50, 50') d'un râtelier d'approvisionnement (304, 304') correspondant jusqu'aux rouleaux de guidage (102, 104) à un positionnement au pas prédéterminé en dehors des rouleaux de guidage (102, 104).

2. La machine de guidage et de maintien (100) de la revendication 1, comprenant une paire de peignes de préparation attribuée à chacun entre le rouleau de guidage supérieur (102) et le rouleau de guidage inférieur (104), chaque paire de peignes de préparation comprenant au moins un peigne mobile (200') et au moins un peigne fixe (200") montés dans l'alignement d'une zone de préparation (308, 308') correspondante de telle sorte que les dentures (204) du peigne mobile et celles des dentures du peigne fixe sont alignées pour permettre le passage des fils (50, 50') à travers les peignes mobiles et fixes.

3. La machine de guidage et de maintien (100) de la revendication 2, dans laquelle chaque peigne mobile (200') est positionné entre la zone de préparation (308, 308') correspondante et un rouleau de guidage (102, 104) correspondant de telle sorte que les pas entre les dentures de chaque peigne sont alignés avec des rainures (102a, 104a) correspondantes aux rouleaux de guidage.

4. La machine de guidage et de maintien (100) de la revendication 3, dans laquelle les peignes mobiles (200') sont installés soit tangentiellement soit perpendiculairement à une surface circonférentielle (102b, 104b) correspondante.

5. La machine de guidage et de maintien (100) de l'une quelconque des revendications 1 à 4, dans laquelle le pas des dentures (204) est au moins égal à 0,7 mm et au plus égal à 1,4 mm.

6. Un système de calandrage (300) pour fabriquer des nappes de caoutchouc renforcé, le système de calandrage comprenant :
la machine de guidage et de maintien (100) de l'une quelconque des revendications 1 à 5 ;
au moins un râtelier d'approvisionnement (304, 304') qui supporte une pluralité de bobines (305, 305') maintenues en rangées uniformes, chaque bobine supportant un fil (50, 50'), chaque fil étant acheminé depuis les bobines vers une sortie (304a) du râtelier d'approvisionnement vers la machine de guidage et de maintien (100) ; et
une machine de calandrage comprenant un cylindre calandre (302) sur lequel au moins une couche de caoutchouc est disposée pour former une ou des nappes avec des fils (50, 50') alignés et parallèles entre eux avec une densité prédéterminée.

7. Le système de calandrage (300) de la revendication 6, comprenant en outre une zone de préparation (308, 308') associé avec un râtelier d'approvisionnement (304, 304') correspondant, une zone de préparation (308) comprenant une paire de peignes de préparation attribués au rouleau de guidage supérieur (102) et une zone de préparation (308') comprenant une paire de peignes de préparation attribués au rouleau de guidage inférieur (104), chaque paire de peignes de préparation comprenant au moins un peigne mobile (200') et au moins un peigne fixe (200") montés en alignement à une zone de préparation (308, 308') correspondante de telle sorte que les dentures (204) du peigne mobile et des dentures du peigne fixe sont alignées pour permettre le passage des fils (50, 50') correspondants à travers la paire de peignes de préparation depuis une sortie respective (304a, 304a') du râtelier d'approvisionnement (304, 304') jusqu'à la machine de guidage et de maintien (100).

8. Un procédé de guidage et de maintien réalisé par le système de calandrage (300) de la revendication 6 ou de la revendication 7 pendant un cycle de calandrage, le procédé comprenant les étapes suivantes :
une étape d'entraînement des fils (50, 50') vers un ou des peignes (200) attribués aux rouleaux de guidage (102, 104) depuis la sortie du râtelier d'approvisionnement jusqu'à la machine de guidage et de maintien (100);
une étape d'acheminement des fils (50, 50') qui arrivent du râtelier d'approvisionnement (304, 304') jusqu'aux rouleaux de guidage (102, 104) correspondant de la machine (100);
une étape de mise en place des fils (50, 50') dans les rainures (102a, 104a) correspondantes des rouleaux de guidage (102, 104) de la machine de guidage et de maintien (100); et
une étape de déplacement des rouleaux de guidage (102, 104) de la position ouverte vers la position fermée pour capturer les fils (50, 50') entre les rouleaux de guidage (102, 104) et le rouleau d'application (106) de manière à ce que les fils respectifs entrent dans les rainures (106a) correspondantes du rouleau d'application (106) en maintenant l'état aligné des fils.

9. Le procédé de la revendication 8, dans lequel l'étape d'acheminement des fils (50, 50') comprend les étapes suivantes :
une étape de tirage concomitant d'un peigne mobile (200') attribué au rouleau de guidage supérieur (102) et des fils (50) vers le rouleau de guidage supérieur ; et
une étape de tirage concomitant d'un peigne mobile (200') attribué au rouleau de guidage inférieur (104) et des fils (50') vers le rouleau de guidage inférieur.

10. Le procédé de la revendication 9, dans lequel le tirage de chaque peigne mobile (200') est réalisé de telle sorte que les pas entre les dentures (204) du peigne mobile (200') sont alignés avec les rainures (102a, 104a) correspondantes des rouleaux de guidage (102, 104).

11. Le procédé de la revendication 10, dans lequel le tirage du peigne mobile (200') est réalisé de telle sorte que les peignes mobiles (200') sont installés soit tangentiellement soit perpendiculairement aux surfaces circonférentielles (102b, 104b) des rouleaux de guidage (102, 104).

12. Le procédé de la revendication 10 ou de la revendication 11, comprenant en outre une étape de transfert des fils (50, 50') dans un état aligné et mise en place avec les rainures (102a, 104a) des rouleaux de guidage (102, 104) vers les rainures (106a) du rouleau d'application (104).

13. Le procédé de l'une quelconque des revendications 10 à 12, comprenant en outre une étape de maintien des peignes mobiles (200') en position installée.

14. Le procédé de la revendication 13, comprenant en outre une étape de retour d'un peigne mobile (200') vers la zone de préparation (308, 308') correspondante après la fin d'un cycle de calandrage.

15. Un cycle de calandrage comprenant le procédé de l'une quelconque des revendications 8 à 14, le cycle de calandrage comprenant en outre une étape d'alimentation du cylindre calandre (302) de la machine de calandrage par des fils (50, 50') alignés par la machine de guidage et de maintien (100).
